# EUROPÄISCHE PATENTSCHRIFT

(11) **EP 1 766 248 B1**
(45) Veröffentlichungstag und Bekanntmachung des Hinweises auf die Patenterteilung: **04.06.2008**
(21) Anmeldenummer: 05762109.6
(22) Anmeldetag: 09.07.2005
(51) Int. Cl.: F16B 35/04, F16B 33/02, F16B 25/00, F16B 39/22

(54) **SCHRAUBE**
SCREW
VIS

(30) Priorität: 15.07.2004 DE 102004034246
(43) Veröffentlichungstag der Anmeldung: 28.03.2007
(73) Patentinhaber: SFS intec Holding AG, 9435 Heerbrugg (CH)
(72) Erfinder: PALM, Erich, CH-9434 Au (CH)
(86) Internationale Anmeldenummer: PCT/EP2005/007443
(87) Internationale Veröffentlichungsnummer: WO 2006/008004

(56) Entgegenhaltungen:
- EP-A- 1 152 157
- DE-A1- 4 015 771
- FR-A- 385 906
- US-A- 5 964 560
- US-A- 6 164 887
- US-A1- 2003 143 058
- US-A1- 2004 120 792

## Beschreibung

Die Erfindung betrifft eine Schraube mit einem zumindest teilweise mit einem Gewinde versehenen Schaft sowie einem Schraubenkopf.
Schrauben der eingangs genannten Art sind für diverse Spezialanwendungen in den unterschiedlichsten Ausführungen bekannt.
Das Dokument US 5964560 offenbart eine Gewindefurchende Schraube mit dem Merkmalen des Oberbegriffs des Anspruchs 1.

Aufgabe der Erfindung ist es, eine Schraube so auszugestalten, dass insbesondere dünnere Bleche miteinander von einer Seite her mit einem möglichst hohen Maß an Losdrehsicherheit miteinander verbunden werden können.

Dies gelingt erfindungsgemäß dadurch, dass zwischen dem Schraubenkopf und dem Gewinde ein gewindefreier Abschnitt ausgebildet ist und das Gewinde zumindest an dem dem Schraubenkopf zugewandten Endbereich des Schaftes wenigstens eine das Gewinde kreuzende Nut, Kerbe, Rille od. dgl. aufweist.

Durch den gewindefreien Abschnitt unter dem Kopf wird das kopfseitige Blech bis unter den Kopf eingedreht, wobei die Kopfunterseite als Anschlag wirkt. Das zweite Blech wird weiter angezogen. Damit wird sichergestellt, dass die beiden Bleche aneinander gezogen werden. Dadurch wird eine höhere Vorspannkraft der Schraube erreicht. Ein Abfallen dieser Vorspannkraft wird verhindert, indem eine das Gewinde kreuzende Nut vorgesehen wird. Dabei entsteht durch die Nut im Gewinde eine losdrehsichere Verbindung. Die Nutbegrenzungen wirken als Eingreifelemente und tragen somit zu einer Verankerung des zumindest in das zweite Blech eingreifenden Gewindes bei.

In einer Ausgestaltung der Schraube weist der gewindefreie Abschnitt einen kleineren Durchmesser als den Kerndurchmesser des Gewindeschaftes auf. Dadurch wird sichergestellt, dass das kopfseitige Blech widerstandslos und möglichst vollständig die Kopfunterseite als Anschlag beim Eindrehen nutzt. Will man bewusst eine spielfreie oder formschlüssige Verbindung unter dem Kopf erreichen, so kann der Durchmesser des gewindefreien Abschnittes im Durchmesser dem Kerndurchmesser des Gewindeschaftes entsprechen oder sogar leicht größer gewählt werden, ohne einen negativen Einfluss auf die Losdrehsicherheit zu erreichen.

In einer weiteren Ausgestaltung der Schraube entspricht die Breite des gewindefreien Abschnittes der Dicke des Bleches, das am nächsten an der Kopfunterseite liegt. Mit dieser Ausgestaltung wird bezüglich Auslegung der gesamten Verbindung eine optimale Situation erreicht, denn während die Schraube in dem dem Schraubenkopf naheliegende Blech überdrehen kann, wird das zweite Blech beim weiteren Eindrehen mit der maximalen Kraft an das erste Blech angezogen.

In einer weiteren Ausgestaltung der Schraube entspricht die Breite des gewindefreien Abschnittes annähernd der Dicke aller miteinander zu befestigen Bleche. Das ist eine zweckmäßige, einfache Möglichkeit, bei Blechen, die in der gesamten Dicke in den gewindefreien Abschnitt gelangen, das Rückdrehen der Schraube zu verhindern. In diesem Fall wird verhindert, dass eines der beiden Bleche beim Rückdrehen respektive Lösen wieder ins Gewinde eingreifen kann. Es kann also kein Drehmoment mehr zwischen den Blechen und der Schraube übertragen werden. Ein sicheres Anziehen ohne Drehmoment-Werkzeug ist in dieser Ausführung somit problemlos möglich. Eine Losdrehsicherung ist auch in diesem Fall gewährleistet. Dazu hilft (helfen) auch die das Gewinde kreuzende(n) Nut(en) mit.

In einer weiteren Ausgestaltung der Schraube läuft die Nut in den gewindefreien Abschnitt aus. Damit wird erreicht, dass eine maximale Wirkung der Nut erzielt wird, denn besonders bei dünnen Blechen ist es möglich, dass die Verbindung zwischen Gewinde und Blech auf weniger als einem Gewindeumgang beruht. Nur eine in den gewindefreien Abschnitt auslaufende Nut kann ermöglichen, dass, soweit von der Geometrie her möglich, die Nut im Einsatz ist.

In einer weiteren Ausgestaltung der Schraube sind die Nuten, Kerben, Rillen od. dgl. U-, V-, trapezförmig oder in einer anderen hohlraumbildenden Form ausgeführt und bilden in der Gewindeflanke Buchten. Die Form wird so ausgestaltet, dass sie das Schneiden des Gewindes unterstützt und dass das Rückdrehen der Schraube nur mit sehr hohen Rückdrehmomenten möglich ist.

In einer weiteren Ausgestaltung der Schraube sind zwei oder mehrere Nuten angebracht. Damit wird die Wirkung der Nut bezüglich Rückdrehmoment und Lage verstärkt. Eine Verstärkung kann mit jeder weiteren Nut am Gewindeumfang erreicht werden. Es muss aber darauf geachtet werden, dass die Funktion des Gewindes an und für sich nicht durch das Anbringen von übermäßig vielen Nuten zu stark beeinträchtigt wird. In den Praxis bewähren sich besonders zwei bis fünf Nuten.

In einer weiteren Ausgestaltung der Schraube verläuft die Nut achsparallel zum Schaft. Dies ist fertigungstechnisch einfach herstellbar und erfüllt die oben vorgängigen Forderungen.

In einer weiteren Ausgestaltung der Schraube verläuft die Nut, Kerbe, Rille od. dgl. links-und/oder rechtsdrehend zum Schaft. Dadurch kann die Wirkung genauer auf die Anwendung abgestimmt werden und damit werden die vorgängig beschriebenen Forderungen noch optimaler erfüllt. Besonders vorteilhaft ist eine rechtsdrehende Nut, Kerbe, Rille od. dgl. mit einer geringen Steigung. Bei dieser Ausprägung wird durch die das Gewinde kreuzende Nut, Kerbe, Rille od. dgl. ein spitzer und ein stumpfer Winkel im Gewindegang erzeugt. Der spitze Winkel führt zu einem höheren Rückdrehmoment der Schraube und der stumpfe Winkel reduziert das Ausfräsen des Bleches und erhöht daher die Anziehkräfte der Schraube.

Ferner wird vorgeschlagen, dass die Nut, Kerbe, Rille od. dgl. vorzugsweise in der Tiefe des Gewindekerndurchmessers ausgeführt ist. Damit wird die Begrenzungskante am Übergang zwischen Gewindeflanke und Nut in einer Länge ausgestaltet, bei der durch die Länge der Begrenzungskante die maximale Rückdrehsicherung erreicht wird.

In einer weiteren Ausgestaltung der Schraube ist die Nut, Kerbe, Rille od. dgl. tiefer als der Gewindekerndurchmessers ausgeführt. Somit wird eine sehr gute Formgebung beim Blech während des Einformens erreicht.

In einer weiteren Ausgestaltung der Schraube ist zumindest auf dem dem gewindefreien Abschnitt angrenzenden Gewindeteil eine klemmende und/oder klebende Beschichtung aufgebracht. Mittels dieser Schicht wird die Klemmwirkung, die durch die geometrischen Formen bestimmt wird, äußerst positiv beeinflusst. Ein Rückdrehen ist nach kurzer Zeit kaum mehr möglich. Es kann also von einer optimalen Befestigung gesprochen werden.

Aus der Fachliteratur ist bekannt, dass Schraubverbindungen zum Beispiel durch Wechselwirkung zwischen Zug- und Druckspannungen, Wärmeausdehnung, Schock- und Vibrationsbelastung, Windschwingungen, Schütteln, bei dynamischer (schwellend oder wechselnd) Belastung, verminderte Selbsthemmung bei mehrgängigen Gewinden oder durch Anbringen von Federscheiben, sich selbst lösen können. Bei der vorliegenden Erfindung entsteht insbesondere durch das Anbringen der Nuten und dem Füllen der Hohlräume mit einer klemmenden und/oder klebenden Beschichtung ein optimaler zusätzlicher Schutz gegen ein Lösen der Verbindung.

Neben dieser kurzfristigen Wirkung während des Befestigungsprozesses werden durch das Befüllen der Nuten, Kerben, Rillen od. dgl. mit der Beschichtung diese auch dazu benutzt, Beschichtung während des Eingewindens kontinuierlich auf das Gewinde aufzubringen. Dieses Vorgehen erhöht schon nach kurzer Zeit die Rückdrehmomente. Dadurch wird eine rückdrehsichere Verbindung bereits bei Blechen von weniger als 0.5 mm Dicke erreicht.

In einer weiteren Ausgestaltung der Schraube ist auf dem gewindefreien Abschnitt und/oder unter dem Kopf eine klemmende und/oder klebende Beschichtung aufgebracht. Bei dünnen Blechen wirkt die Beschichtung im angezogenen Zustand nur noch in einem sehr kleinen Gewindebereich. Durch das Aufbringen der Beschichtung auf den gewindefreien Abschnitt, kann verhindert werden, dass die Schraube schon mit geringen Drehkräften bewegt werden kann. Auch wenn sich die Schraubverbindung nicht lösen kann, liegt der Vorteil dieser Ausgestaltung darin, dass durch die zusätzliche Fixierung der Schraube unnötige Bewegungen verhindert werden. So ist auch ein mögliches Klimpern resp. Vibrieren, wie es durch den Wind an einer Fassade möglich ist, unterbunden.

Bei einer weiteren Ausgestaltung der Erfindung ist vorgesehen, dass als Beschichtung ein Zwei-Komponentenkleber od. dgl. aufgebracht ist. Es lassen sich hier beliebige bekannte oder neu entwickelte Klebstoffe aufbringen, die die gewünschten Effekte unterstützen.

In einer weiteren Ausgestaltung der Schraube ist als Beschichtung Kunststoff od. dgl. aufgebracht. Kunststoffe können genau auf die Anforderungen der Schraubverbindung abgestimmt werden und bilden daher eine ideale Alternative zu anderen Beschichtungen, z.B. in flüssiger Form.

In einer weiteren Ausgestaltung der Schraube ist als schmierende Beschichtung Wachs, Polytetrafluorethylen (PTFE), Kunststoff od. dgl. wenigstens an dem dem Schraubenkopf abgewandten Endbereich des Schaftes aufgebracht. Um das Gewindeformmoment während des Eindrehens zu reduzieren, kann an den Stellen des Gewindes, die nach dem Anziehen der Befestigung nicht mehr in direktem Kontakt mit einem der Bleche stehen, eine schmierende oder gleitende Schicht aufgebracht werden. Damit können die Einformmomente reduziert werden. Eine Verschraubung ist so auch mit weniger starken Hilfsmitteln, wie Bohrmaschinen u.a., möglich. Bei Handverschraubungen wird erreicht, dass der Monteur weniger Kraftaufwand benötigt und schneller die Schraube eingewinden kann.

In einer weiteren Ausgestaltung der Schraube ist die Beschichtung partiell oder umfangsgeschlossen aufgebracht. Bereits eine partielle Beschichtung wirkt unterstützend bezüglich Rückdrehmoment. Aber auch partiell aufgebrachte Schmiermittel sind möglich. Es sind also beliebige Kombinationen sinnvoll. Diese können beliebig auf die Anforderungen der Schraubverbindung abgestimmt werden.

In einer weiteren Ausgestaltung der Schraube ist das Gewinde am dem dem Schraubenkopf abgewandten Endbereich des Schaftes unrund ausgebildet. Neben dem spanlosen Herstellen des Muttergewindes, wird dieses auch kaltverfestigt. Durch geringere Materialverdrängung resultiert ein geringeres Eindrehmoment.

In einer weiteren Ausgestaltung der Schraube ist das Gewinde trilobular ausgebildet. Durch die hohe Flankenüberdeckung dieser Gewindeform wird eine formschlüssige Verbindung zwischen Schraube und Blech erreicht. Dies ist insbesondere bei dünnen Blechen eine wichtige Voraussetzung, um hohe axiale Zugkräfte aufnehmen zu können.

In einer weiteren Ausgestaltung der Schraube weist der Schaft an dem dem Schraubenkopf abgewandten Endbereich des Schaftes einen konischen Gewindeabschnitt auf. Soweit vorgestanzte Befestigungslöcher vorhanden sind, kann dadurch zusätzlich eine Zentrierung der Löcher erreicht werden.

In einer weiteren Ausgestaltung der Schraube läuft das Gewinde an dem dem Schraubenkopf abgewandten Ende in eine Spitze aus. Dadurch können vorgelochte, dünne Bleche beinahe bis zur Größe des Lochdurchmessers durch die Spitze der Schraube zentriert und somit während des Montagevorgangs in die korrekte Position gezwungen werden. Diese Funktion ist auch dann gewährleistet, wenn das Gewinde nicht bis in die Spitze vollständig ausläuft. Selbst eine kegelförmige Spitze kann diese Funktion durchaus übernehmen.

In einer weiteren Ausgestaltung der Schraube ist an der dem Drehangriff abgewandten Seite eine selbstbohrende oder eine selbsteindringende Spitze angebracht, womit bei bereits zentrierten Blechen das Bohrloch direkt mit dem Montagevorgang erstellt wird. Dies fördert nicht nur die Effizienz, sondern stellt auch sicher, dass der Bohrlochdurchmesser ideal auf das anschliessende Eingewinden und Anziehen der Verbindung abgestimmt ist.

Ausführungsbeispiele der Erfindung werden im Folgenden unter Bezugnahme auf die Zeichnungen näher erläutert. Es zeigen:
- Fig. 1: ein erstes Ausführungsbeispiel einer Schraube;
- Fig. 2: eine Ausführung mit linksdrehenden, das Gewinde kreuzenden Nuten;
- Fig. 3: eine Ausführung mit rechtsdrehenden, das Gewinde kreuzenden Nuten;
- Fig. 4: einen Schnitt nach der Linie IV - IV in Fig. 2, mit V-förmigen Nuten;
- Fig. 5: einen Schnitt nach der Linie IV - IV in Fig. 2, mit trapezförmigen Nuten;
- Fig. 6: einen Teilschnitt durch ein Anwendungsbeispiel mit zwei Blechen, wobei ein Gewindeeingriff im äußeren Blech vorgesehen ist;
- Fig. 7: einen Teilschnitt durch ein Anwendungsbeispiel mit zwei Blechen, welche in einem gewindefreien Abschnitt der Schraube eingreifen, wobei das Gewinde nicht mehr im Blech liegt;
- Fig. 8: einen Teilschnitt durch ein Anwendungsbeispiel mit zwei Blechen, wobei eine Schraube mit einer Teilbeschichtung des Gewindes eingesetzt ist;
- Fig. 9: einen Teilschnitt durch ein Anwendungsbeispiel mit zwei Blechen, wobei eine Schraube mit partieller Beschichtung in einer Nut eingesetzt ist;
- Fig. 10: ein weiteres Ausführungsbespiel einer Schraube mit einer Bohrspitze;
- Fig. 11: einen Schnitt nach der Linie XI - XI in Fig. 10, wobei U-förmige Nuten vorgesehen sind; und
- Fig. 12: einen Teilschnitt durch ein Anwendungsbeispiel mit zwei Blechen, wobei eine selbstbohrende Schraube eingesetzt wird.

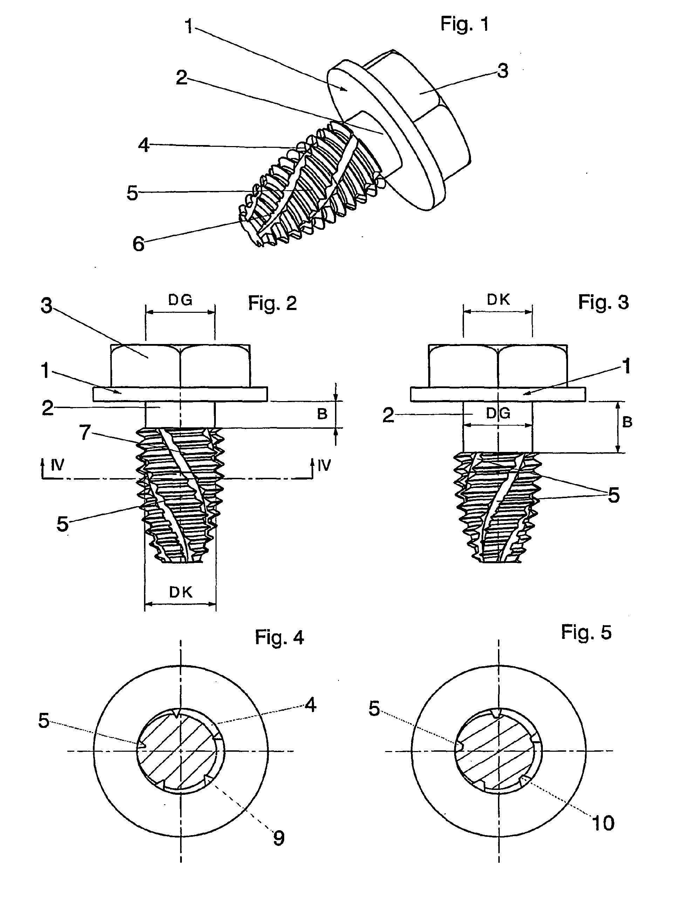

Eine in Fig. 1 dargestellte Schraube 1 weist einen gewindefreien Abschnitt 2 zwischen dem Schraubenkopf 3 und dem Gewinde 4 auf. Das Gewinde 4 weist mindestens eine das Gewinde kreuzende Nut 5 auf. Damit kann eine losdrehsichere Befestigung zwischen zwei und mehreren Blechen 11,14 durch ein einziges Befestigungselement erreicht werden. Beim Einsatz von vorgelochten Blechen können Ausführungsvarianten am Endbereich 6 des Schaftes 7 konisch ausgebildet werden, damit eine Zentrierung der Bleche 11,14 erfolgt. Bei derartig ausgeführten Varianten kann der konische Endbereich 6 bis zu einer Spitze ausgebildet sein. Dieser Endbereich 6 kann auch eine trilobulare Schaftform oder wie das ganze Gewinde trilobular sein.

In einer Ausführungsvariante gemäß Fig. 2 wird eine linksdrehende Nut 5, die das Gewinde kreuzt, angebracht. In Abstimmung auf die gesamte Verbindung kann diese Variante vorteilhaft sein. Wird der Durchmesser DG des gewindefreien Abschnittes 2 kleiner als der Kerndurchmesser DK des Schaftes 7 ausgelegt, kann damit erreicht werden, dass insbesondere das dem Schraubenkopf 3 naheliegende Blech radiale Verschiebungen zulässt und damit zwischen zwei und mehreren Befestigungspunkten keine Spannungen oder Durchbiegungen im Blech entstehen. Dadurch können große Flächen mit Blechen und hoher ästhetischer Anmut abgedeckt werden. In den meisten Ausführungen ist von besonders hohem Nutzen, wenn die Nuten 5 in den gewindefreien Abschnitt 2 auslaufen, da insbesonders bei dünnen Blechen dadurch sichergestellt wird, dass ein Rückdrehen der Schraube 1 aus den Blechen verhindert wird.

In einer weiteren Ausführung zeigt Fig. 3 eine Schraube 1 mit mehreren Nuten 5, die rechtsdrehend angebracht sind. Je nach Herstellung und Verwendung können so wirtschaftliche Herstellung und optimale Anpassung an die gesamte Befestigung erzielt werden. Dasselbe gilt auch für weitere Anordnungen der Nuten 5 wie z.B. eine achsparallele oder weitere Kombinationen von links- und rechtsdrehendem Verlauf der Nut.

Die Begriffe "links-" und "rechtsdrehend" bedeuten links- bzw. rechtsdrehend zu dem Schaft 7 und sind in dem gleichen Sinn zu verstehen wie "links-" bzw. "rechtsgängig" bei einem Gewinde.

Eine weitere Ausprägung bezieht sich auf die Form der Nut. Fig. 4 zeigt einen Schnitt durch den Schaft 7, wobei das Gewinde 4 mit einer V-förmigen Nut 5 gekreuzt wird. Durch die Nut 5 im Gewinde 4 wird ein Hohlraum 9 geschaffen, der mit einer Beschichtung, zum Beispiel einem Klebstoff, Schmierstoff oder ähnliches gefüllt werden kann. Dank diesem Hohlraum 9 wird sichergestellt, dass während des Verschraubens ein großer Teil der Flüssigkeit zwischen dem Innen- und den Außengewinde eingeschlossen wird. Beim Einsatz von Schmierstoffen gelingt es dadurch während des Eingewindens kontinuierlich das Gewinde mit einem feinen Film an Flüssigkeit zu versorgen. Dadurch können die Eindrehmomente markant reduziert werden. Umgekehrt kann mit einem Klebstoff erreicht werden, dass die Verbindung nach dem Eindrehen auch noch durch einen Klebstoff zusätzlich gegen Lösen gesichert werden kann.

In Fig. 5 wird der vorangehend beschriebene Effekt mit Hilfe von durch die Form der Nut 5 erzeugten Buchten 9 oder anderen Formen eines Hohlraumes weiter optimiert, indem die Form trapezförmig oder in einer anderen Gestalt geformt wird. So wird eine größere Bucht erzeugt. Damit lassen sich auch längere Schrauben mit gleichbleibenden Leistungen herstellen. Neben der Form der Nut 5 wird die Nut 5 vorzugsweise in der Tiefe 10 des Gewindekerndurchmessers DK ausgeführt. Das Volumen des Hohlraumes kann aber auch durch eine tiefer als der Gewindekerndurchmesser DK ausgeführte Nut 5 erreicht werden. Ebenso ist es möglich mehrere, dafür weniger tiefe Nuten auf dem Gewinde aufzubringen.

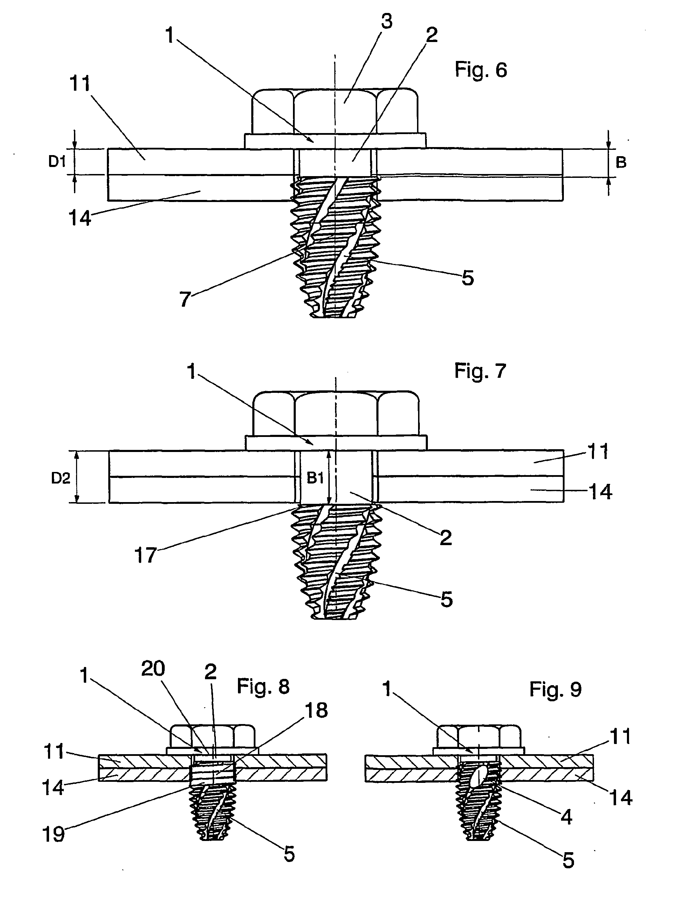

In einer weiteren Ausgestaltung der Schraube wird gemäß Fig. 6 die Breite B des gewindefreien Abschnittes 2 in der Dicke D1 des Bleches 11, das am nächsten an der Kopfunterseite 13 liegt, entsprechend ausgeführt. Das dem Schaft 7 abgewandte Blech 11 wird dadurch beim Anziehen zwischen Schraubenkopf 3 und dem äußeren Blech 14 eingeklemmt.

Fig. 7 zeigt eine weitere Ausgestaltung der Schraube, in der der gewindefreie Abschnitt 2 in einer Breite B1 ausgelegt wird, die annähernd der Dicke D2 aller miteinander zu befestigenden Bleche 11,14 entspricht. Beim Eingewinden kann die Schraube 1 soweit eingedreht werden, dass alle zu befestigenden Bleche im gewindefreien Abschnitt 2 positioniert sind. Da auch beim Rückdrehen das Gewindeende 17 nicht mehr im Blech 14 ansetzen kann, kann von einer unlösbaren Verbindung gesprochen werden.

Fig. 8 zeigt eine Ausführungsvariante der Schraube 1 mit einer Beschichtung 18 auf dem dem gewindefreien Abschnitt 2 folgenden Gewindeteil 19. Bei einer Ausführung gemäß Fig. 8 wird der Klemmeffekt durch die Beschichtung 18 massiv verbessert und eine losdrehsichere Verbindung erreicht, indem die durch die Nut 5 entstandenen Hohlräume 9 mit einer Beschichtung 18 gefüllt werden. Entsprechend kann auch der gewindefreie Abschnitt 2 mit beschichtet werden. Zusätzlich kann auch die Unterseite 13 des Schraubenkopfes 3 mit einer Beschichtung 18 versehen werden. So können damit beliebige Kombinationen von Beschichtungsorten und Beschichtungsarten den Sicherungs-, aber auch Schmiereigenschaften angepasst werden. Als Beschichtungen 18 für Klemm-, Klebe- oder andere Sicherungseigenschaften eignen sich unter anderem Zweikomponentenklebstoffe, Kunststoffe, Gummi od. dgl. Als Schmierstoffe können Wachse, Polytetrafluorethylen (PTFE), Kunststoff od. dgl. eingesetzt werden.

Eine weitere Ausführungsvariante zeigt Fig. 9. Um die beschriebenen Klemm- oder Schmiereffekte zu erreichen, kann je nach Anwendung bereits eine insbesondere über der Nut angebrachte partielle Beschichtung ausreichen, um genügend Klemm- respektive Schmierwirkung zu erhalten. Insbesondere ist es denkbar, dass am Schaftende eine partielle Beschichtung mit einem Schmiermittel die Einformmomente reduziert und dass an dem Gewindeteil des nach der Verschraubung noch mit dem Gewinde 4 des Bleches 14 in Kontakt stehenden Teiles eine klemmende respektive klebende Beschichtung angebracht ist. Die Effekte können so beliebig kombiniert werden.

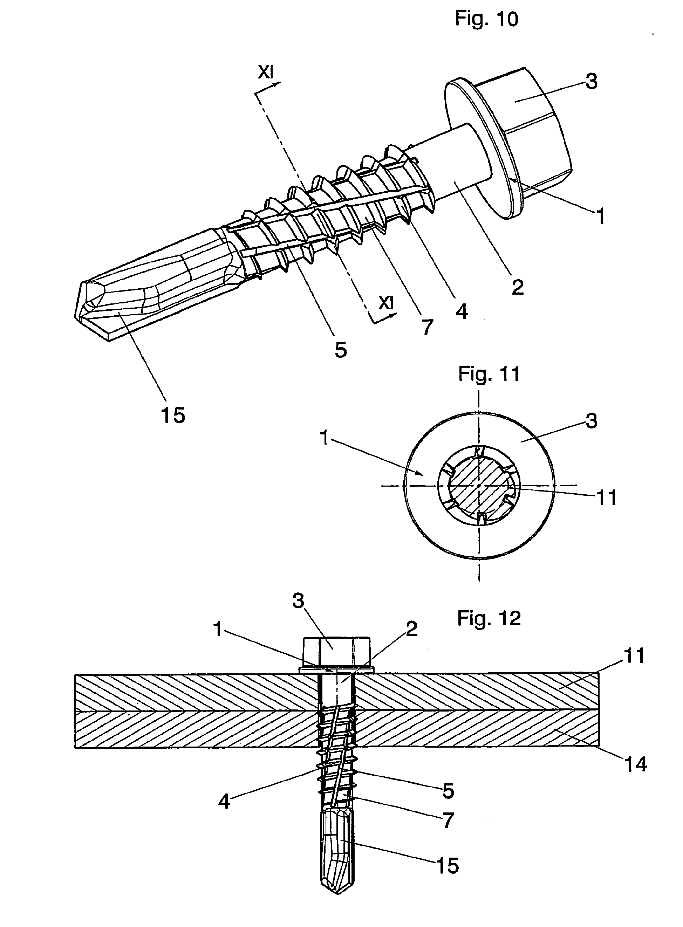

In Fig. 10 wird eine Ausgestaltung der Schraube 1 dargestellt, welche an dem dem Schraubenkopf 3 abgewandten Endbereich mit einer Bohrspitze 15 versehen ist. Dies ermöglicht, die Verbindung in einem Arbeitsgang ohne vorheriges Vorbohren herzustellen.

Fig. 11 zeigt eine besondere Ausprägung der Schraube 1 mit einer U-förmigen Nut 5. Diese Form der Nut 5 eignet sich, um besonders hohe Rückdrehwerte des Gewindes 4 zu erhalten.

Fig. 12 zeigt eine selbstbohrende Schraube 1 die sich auch für dickere Bleche 11, 14 dadurch auszeichnet, dass durch den gewindefreien Abschnitt 2 die Bleche 11, 14 aneinander gezogen werden und durch die das Gewinde 4 kreuzenden Nuten 5 eine losdrehsichere Verbindung erreicht wird.

## Patentansprüche

1. Gewindefurchende Schraube (1) mit einem teilweise mit einem Gewinde (4) versehenen Schaft (7) zum Eindrehen in vorgefertigte Löcher und mit einem Schraubenkof (3) wobei zwischen dem Schraubenkopf (3) und dem Gewinde ein gewindefreier Abschnitt ausgebildet ist, wobei das Gewinde (4) zumindest in dem von dem Schraubenkopf (3) abgewandten Endbereich trilobular ausgebildet ist,
**dadurch gekennzeichnet, dass** das Gewinde (4) zumindest in dem dem Schraubenkopf (3) zugewandten Endbereich des Schaftes (7) wenigstens eine das Gewinde (4) kreuzende und in den gewindefreien Abschnitt (2) auslaufende Nut (5), Kerbe, Rille od.dgl. aufweist, und dass der Durchmesser (DG) des gewindefreien Abschnittes (2) höchstens leicht größer als der Kerndurchmesser (DK) des Gewindeschaftes ist.

2. Schraube nach Anspruch 1, **dadurch gekennzeichnet, dass** der gewindefreie Abschnitt (2) einen kleineren Durchmesser (DG) als den Kerndurchmesser (DK) des Schaftes (7) aufweist.

3. Schraube nach Anspruch 1 oder 2, **dadurch gekennzeichnet, dass** die Breite (B) des gewindefreien Abschnittes (2) der Dicke (D1) des Bleches (11), das am nächsten an der Kopfunterseite (13) liegt, entspricht.

4. Schraube nach Anspruch 1 oder 2, **dadurch gekennzeichnet, dass** die Breite (B) des gewindefreien Abschnittes (2) annähernd der Dicke (D2) aller zu befestigen Bleche (11, 14) entspricht.

5. Schraube nach einem der Ansprüche 1 bis 4, **dadurch gekennzeichnet, dass** die Nut (5), Kerbe, Rille od. dgl. U-, V-, trapezförmige od. dgl. Buchten (9) oder andere Formen eines Hohlraumes in dem Gewinde (4) bildet.

6. Schraube nach einem der Ansprüche 1 bis 5, **dadurch gekennzeichnet, dass** das Gewinde (4) zwei oder mehr Nuten (5), Kerben, Rillen od. dgl. aufweist.

7. Schraube nach einem der Ansprüche 1 bis 6, **dadurch gekennzeichnet, dass** die Nut (5), Kerbe, Rille od. dgl. achsparallel zum Schaft (7) verläuft.

8. Schraube nach einem der Ansprüche 1 bis 6, **dadurch gekennzeichnet, dass** die Nut (5), Kerbe, Rille od. dgl. links- und/oder rechtsdrehend zum Schaft (7) verläuft.

9. Schraube nach Anspruch 7 oder 8, **dadurch gekennzeichnet, dass** die Nut (5), Kerbe, Rille od. dgl. vorzugsweise in der Tiefe des Kerndurchmessers (DK) ausgeführt ist.

10. Schraube nach Anspruch 7 oder 8, **dadurch gekennzeichnet, dass** die Nut (5), Kerbe, Rille od. dgl. tiefer als der Kerndurchmessers (DK) ausgeführt ist.

11. Schraube nach einem der Ansprüche 1 bis 10, **dadurch gekennzeichnet, dass** auf einem an den gewindefreien Abschnitt (2) angrenzenden Gewindeteil (19) eine klemmende und/oder klebende Beschichtung (18) aufgebracht ist.

12. Schraube nach einem der Ansprüche 1 bis 11, **dadurch gekennzeichnet, dass** auf den gewindefreien Abschnitt (2) und/oder auf die Kopfunterseite (13) eine klemmende und/oder klebende Beschichtung (18) aufgebracht ist.

13. Schraube nach Anspruch 11 oder 12, **dadurch gekennzeichnet, dass** die Beschichtung (18) ein Zweikomponentenkleber od. dgl. ist.

14. Schraube nach Anspruch 11 oder 12, **dadurch gekennzeichnet, dass** die Beschichtung (18) Kunststoff od. dgl. ist.

15. Schraube nach einem der Ansprüche 11 bis 14, **dadurch gekennzeichnet, dass** als schmierende Beschichtung (18) Wachs, Polytetrafluorethylen (PTFE), Kunststoff od. dgl. wenigstens in dem von dem Schraubenkopf abgewandten Endbereich (6) des Schaftes aufgebracht ist.

16. Schraube nach einem der Ansprüche 11 bis 15, **dadurch gekennzeichnet, dass** die Beschichtung (18) partiell oder umfangsgeschlossen aufgebracht ist.

17. Schraube nach einem der Ansprüche 1 bis 16, **dadurch gekennzeichnet, dass** das gesamte Gewinde (4) trilobular ausgebildet ist.

18. Schraube nach einem der Ansprüche 1 bis 17, **dadurch gekennzeichnet, dass** der Schaft (7) in dem von dem Schraubenkopf abgewandten Endbereich (6) ein konisch auslaufendes Gewinde (4) aufweist.

19. Schraube nach einem der Ansprüche 1 bis 18, **dadurch gekennzeichnet, dass** das Gewinde (4) in dem von dem Schraubenkopf abgewandten Endbereich (6) in eine zumindest kegelförmige Spitze ausläuft.

20. Schraube nach einem der Ansprüche 1 bis 17, **dadurch gekennzeichnet, dass** in dem von dem Schraubenkopf (3) abgewandten Endbereich (6) eine selbstbohrende oder selbsteindringende Spitze (15) angebracht ist.

## Claims

1. A thread-tapping screw (1) with a partially threaded (4) shank (7) to be screwed into prefabricated holes and with a screw head (3), wherein a threadless portion is formed between the screw head (3) and the screw-thread, wherein the screw-thread (4) is of trilobular form at least in the end portion remote from the screw head (3), **characterised in that**, at least in the end portion of the shank (7) nearest the screw head (3), the screw-thread (4) has a slot (5), notch, groove or the like intersecting the screw-thread (4) and extending into the threadless portion (2), and **in that** the diameter (DG) of the threadless portion (2) is at most slightly greater than the core diameter (DK) of the threaded shank.

2. A screw according to Claim 1, **characterised in that** the threadless portion (2) is of smaller diameter (DG) than the core diameter (DK) of the shank (7).

3. A screw according to Claim 1 or 2, **characterised in that** the width (B) of the threadless portion (2) corresponds to the thickness (D1) of the sheet (11) which is situated closest to the underside (13) of the head.

4. A screw according to Claim 1 or 2, **characterised in that** the width (B) of the threadless portion (2) corresponds approximately to the thickness (D2) of all the sheets (11,14) to be fastened.

5. A screw according to any one of Claims 1 to 4, **characterised in that** the slot (5), notch, groove or the like forms U-shaped, V-shaped, trapezium-shaped or similar indentations (9) or other forms of hollow space in the screw-thread (4).

6. A screw according to any one of Claims 1 to 5, **characterised in that** the screw-thread (4) has two or more slots (5), notches, grooves or the like.

7. A screw according to any one of Claims 1 to 6, **characterised in that** the slot (5), notch, groove or the like extends axially parallel to the shank (7).

8. A screw according to any one of Claims 1 to 6, **characterised in that** the slot (5), notch, groove or the like extends counter-clockwise and/or clockwise relative to the shank (7).

9. A screw according to Claim 7 or 8, **characterised in that** the slot (5), notch, groove or the like is preferably formed in the depth of the core diameter (DK).

10. A screw according to Claim 7 or 8, **characterised in that** the slot (5), notch, groove or the like is formed deeper than the core diameter (DK).

11. A screw according to any one of Claims 1 to 10, **characterised in that** a gripping and/or adhesive coating (18) is applied to a threaded portion (19) adjacent the threadless portion (2).

12. A screw according to any one of Claims 1 to 11, **characterised in that** a gripping and/or adhesive coating (18) is applied to the threadless portion (2) and/or to the underside (13) of the head.

13. A screw according to Claim 11 or 12, **characterised in that** the coating (18) is a two-component adhesive or the like.

14. A screw according to Claim 11 or 12, **characterised in that** the coating (18) is plastics material or the like.

15. A screw according to any one of Claims 11 to 14, **characterised in that** wax, polytetrafluoroethylene (PTFE), plastics material or the like is applied as lubricant coating at least in the end portion (6) of the shank remote from the screw head.

16. A screw according to any one of Claims 11 to 15, **characterised in that** the coating (18) is applied partially or fully around the circumference.

17. A screw according to any one of Claims 1 to 16, **characterised in that** the entire screw-thread (4) is of trilobular form.

18. A screw according to any one of Claims 1 to 17, **characterised in that** the shank (7) has a conically tapering screw-thread (4) in the end portion (6) remote from the screw head.

19. A screw according to any one of Claims 1 to 18, **characterised in that** the screw-thread (4) extends into an at least conical tip in the end portion (6) remote from the screw head.

20. A screw according to any one of Claims 1 to 17, **characterised in that** a self-drilling or self-piercing tip (15) is attached in the end portion (6) remote from the screw head (3).

## Revendications

1. Vis auto-taraudeuse (1) ayant une tige (7) munie en partie d'un filetage (4) pour être vissée dans des perçages réalisés préalablement ainsi qu'une tête de vis (3),
entre la tête de vis (3) et le filetage il y a un segment sans filetage,
dans la zone d'extrémité, à l'opposé de la tête de vis (3), le filetage (4) est trilobé,
**caractérisée en ce qu'**
au moins dans la région d'extrémité de la tige (7) tournée vers la tête de vis (3), le filetage (4) a au moins une rainure (5), entaille, gorge ou analogue, croisant le filetage (4) et se terminant dans le segment sans filetage (2) et
le diamètre (DG) du segment sans filetage (2) est au plus légèrement supérieur au diamètre de base (DK) du corps fileté.

2. Vis selon la revendication 1,
**caractérisé en ce que**
le segment sans filetage (2) a un diamètre plus petit (DG) que le diamètre de base (DK) de la tige (7).

3. Vis selon la revendication 1 ou 2,
**caractérisée en ce que**
la largeur (B) du segment sans filetage (2) correspond à l'épaisseur (D1) de la tôle (11) située le plus près de la face inférieure (13) de la tête.

4. Vis selon la revendication 1 ou 2,
**caractérisée en ce que**
la largeur (B) du segment sans filetage (2) correspond sensiblement à l'épaisseur (D2) de toutes les tôles (11, 14) à fixer.

5. Vis selon l'une des revendications 1 à 4,
**caractérisée en ce que**
la rainure (5), l'encoche, la gorge ou analogue a une forme en U, en V, une forme trapézoïdale ou en cavité (9) quelconque dans le filetage (4).

6. Vis selon l'une des revendications 1 à 5,
**caractérisée en ce que**
le filetage (4) comporte deux ou plusieurs rainures (5), encoches, gorges ou analogues.

7. Vis selon l'une des revendications 1 à 6,
**caractérisée en ce que**
la rainure (5), gorge, encoche ou analogue est parallèle à l'axe de la tige (7).

8. Vis selon l'une des revendications 1 à 6,
**caractérisée en ce que**
la rainure (5), l'encoche, la gorge ou analogue tournent à gauche et/ou à droite par rapport à la tige (7).

9. Vis selon les revendications 7 ou 8,
**caractérisée en ce que**
la rainure (5), l'encoche, gorge ou analogue, est de préférence réalisée dans la profondeur du diamètre de base (DK).

10. Vis selon la revendication 7 ou 8,
**caractérisée en ce que**
la rainure (5), encoche, gorge ou analogue, est plus profonde que le diamètre de base (DK).

11. Vis selon l'une des revendications 1 à 10,
**caractérisée en ce que**
la partie de filetage (19) adjacente au segment sans filetage (2) a un revêtement (18) de serrage et/ou de collage.

12. Vis selon l'une des revendications 1 à 11,
**caractérisée en ce que**
le segment sans filetage (2) et/ou la face inférieure de la tête (13) comportent un revêtement de serrage et/ou de collage (18).

13. Vis selon les revendications 11 ou 12,
**caractérisée en ce que**
le revêtement (18) est une colle à deux composants ou analogue.

14. Vis selon la revendication 11 ou 12,
**caractérisée en ce que**
le revêtement (18) est de la matière plastique.

15. Vis selon l'une des revendications 11 à 14,
**caractérisée en ce que**
le revêtement lubrifiant (18) est de la cire, du polytétrafluoréthylène (PTFE), une matière plastique ou analogue, au moins dans la région d'extrémité (6) de la tige à l'opposé de la tête de vis.

16. Vis selon l'une des revendications 11 à 15,
**caractérisée en ce que**
le revêtement (18) est appuyé partiellement ou en périphérie.

17. Vis selon l'une des revendications 11 à 16,
**caractérisée en ce que**
l'ensemble du filetage (4) est trilobé.

18. Vis selon l'une des revendications 1 à 17,
**caractérisée en ce que**
la zone d'extrémité (6) de la tige (7), à l'opposé de la tête de vis, comporte un filetage (4) qui se termine suivant une forme conique.

19. Vis selon l'une des revendications 1 à 18,
**caractérisée en ce que**
le filetage (4) se termine par une pointe au moins conique dans la région d'extrémité (6) à l'opposée de celle de la tête de vis.

20. Vis selon l'une des revendications 1 à 17,
**caractérisée en ce que**
la région d'extrémité (6), à l'opposé de la tête de vis (3), comporte une pointe (15) auto-perforante ou auto-pénétrante.
